(19) Europäisches Patentamt
European Patent Office
Office européen des brevets

(11) EP 4 286 882 A1

(12) DEMANDE DE BREVET EUROPEEN

(43) Date de publication:
06.12.2023 Bulletin 2023/49

(51) Classification Internationale des Brevets (IPC):
G01S 7/02 (2006.01)          G01S 7/52 (2006.01)

(21) Numéro de dépôt: 22305804.1

(52) Classification Coopérative des Brevets (CPC):
G01S 7/021; G01S 7/52001; H04K 3/80; H04K 3/822

(22) Date de dépôt: 02.06.2022

(84) Etats contractants désignés:
AL AT BE BG CH CY CZ DE DK EE ES FI FR GB GR HR HU IE IS IT LI LT LU LV MC MK MT NL NO PL PT RO RS SE SI SK SM TR
Etats d'extension désignés:
BA ME
Etats de validation désignés:
KH MA MD TN

(71) Demandeur: BULL SAS
78340 Les Clayes-Sous-Bois (FR)

(72) Inventeurs:
• BELAFDIL, Chakib
  84300 CAVAILLON (FR)
• BUSI, Jean-Daniel
  13127 VITROLLES (FR)
• ALLOUCHE, Théo
  69100 VILLEURBANNE (FR)

(74) Mandataire: IPAZ
Bâtiment Platon
Parc Les Algorithmes
91190 Saint-Aubin (FR)

(54) **PROCÉDÉ, PROGRAMME D'ORDINATEUR ET DISPOSITIF DE DÉTECTION D'ÉMETTEUR(S) DE SIGNAUX IMPULSIONNELS**

(57) L'invention concerne un procédé (200) de détection d'émetteur(s) de signaux impulsionnels, dans une zone, dite zone d'écoute, à partir d'impulsions reçues, ledit procédé (200) comprenant les étapes suivantes :
- génération (104), pour chaque impulsion reçue, d'un jeu de données, dit descripteur, comprenant au moins une caractéristique de ladite impulsion ;
- regroupement (106) des impulsions reçues en plusieurs groupes, dits émissions, en fonction des descripteurs desdites impulsions ;
-calcul (108) d'un score de dissimilarité entre lesdites émissions considérées par paire ; et
-identification (110) d'un nombre d'émetteur(s) impulsionnel(s) par agrégation hiérarchique desdites paires d'émission, en fonction d'un seuil de dissimilarité préalablement déterminé.

Elle concerne également un programme d'ordinateur et un dispositif mettant en œuvre un tel procédé de détection d'émetteurs impulsionnels.

FIG. 1

EP 4 286 882 A1

## Description

La présente invention concerne un procédé de détection d'émetteur(s) de signaux impulsionnels, et en particulier un procédé de détection du nombre d'émetteurs de signaux impulsionnels dans une zone d'écoute. Elle concerne également un programme d'ordinateur et un dispositif mettant en oeuvre un tel procédé.

Le domaine de l'invention est de manière générale le domaine de la détection d'émetteurs de signaux impulsionnels, tels que des radars, des sonars, des émetteurs de radiocommunication.

### État de la technique

La détection des émetteurs de signaux impulsionnels, également appelés émetteurs impulsionnels, dans une zone donnée, se base sur une étude des impulsions reçues depuis ladite zone donnée. Plus précisément, une écoute de la zone donnée est réalisée afin de collecter assez d'impulsions. Ensuite, chaque impulsion reçue est traitée pour en déduire un descripteur, tel que par exemple un PDW (pour « Pulse Descriptor Word ») comprenant une ou plusieurs caractéristiques de l'impulsion telles que par exemple la fréquence de l'impulsion, la date de réception de l'impulsion, la largeur de l'impulsion, le niveau de l'impulsion, la durée écoulée entre deux impulsions consécutives (« PRI » pour « Puise Repetition Time »), la direction de réception de l'impulsion (« DOA » pour « Direction of Arrival »), etc.

Suivant une première solution connue, les impulsions reçues sont regroupées en un ou plusieurs groupes, appelées émission, en fonction de leur fréquence. Cependant, cette solution ne permet pas de détecter un émetteur multifréquence, de sorte qu'un émetteur multifréquence est détecté, de manière erronée, comme plusieurs émetteurs différents.

Une autre solution, consiste à regrouper les émissions suivant leur direction d'arrivée. Ensuite, pour les émissions ayant une même direction d'arrivée, un histogramme est calculé sur chaque caractéristique du descripteur (fréquence, longueur d'onde, PRI, etc.), pour créer des sousgroupe d'émissions, appelés ilots. Enfin, un score de similitude est calculé entre les ilots considérés par paires, pour déterminer si les émissions proviennent du même émetteur. Cette solution permet de détecter un émetteur multifréquence mais reste peu précise car elle dépend des seuils utilisés pour les scores de similitude.

Un but de la présente invention est de remédier à au moins un des inconvénients de l'état de la technique.

Un autre but de l'invention est de proposer une solution plus précise et plus efficace de détection d'émetteurs impulsionnels dans une zone donnée, en particulier lorsque la zone comporte un ou des émetteurs multifréquences.

### Exposé de l'invention

L'invention propose d'atteindre au moins l'un des buts précités par un procédé de détection d'émetteur(s) de signaux impulsionnels, et en particulier le nombre d'émetteur(s) de signaux impulsionnels, et encore plus particulièrement leurs regroupements, dans une zone, dite zone d'écoute, à partir d'impulsions reçues, ledit procédé comprenant les étapes suivantes :

- génération, pour chaque impulsion reçue, d'un jeu de données, dit descripteur, comprenant au moins une caractéristique de ladite impulsion ;
- regroupement des impulsions reçues en plusieurs groupes, dits émissions, en fonction des descripteurs desdites impulsions ;
- calcul d'un score de dissimilarité entre lesdites émissions considérées par paire ; et
- identification d'un nombre d'émetteur(s) impulsionnel(s), et en particulier leurs regroupements, par agrégation hiérarchique desdites paires d'émission, en fonction d'un seuil de dissimilarité préalablement déterminé.

Ainsi, l'invention propose de regrouper les impulsions reçues en plusieurs émissions en fonction de leurs descripteurs. Les impulsions ayant les mêmes descripteurs sont donc regroupés ensemble, à l'instar des solutions connues. Ensuite, et à la différence des solutions connues, le procédé selon l'invention propose de réaliser une agrégation hiérarchique des émissions sur la base d'un score de dissimilarité entre les impulsions. Enfin, le nombre d'émetteur(s) est détecté en fonction de l'agrégation obtenue et d'un seuil de dissimilarité préalablement appris/déterminé pour la zone d'écoute concernée.

L'agrégation hiérarchique peut être réalisée par un algorithme de regroupement hiérarchique non supervisé, et permet de regrouper deux à deux les émissions les plus proches, sans utilisation de seuils. Ainsi, la précision de la solution proposée par l'invention n'est pas dépendant de seuils prédéterminés pour le regroupement des émissions entre-elles. De plus, et à la différence des solutions connues, le regroupement des émissions entre elles est basé, non pas sur la similarité entre les émissions, mais sur la dissimilarité des émissions. Lorsque l'agrégation hiérarchique est obtenue, l'identification du nombre d'émetteurs dans la zone d'écoute peut être immédiatement réalisée en appliquant le seuil dissimilarité préalablement déterminé, par exemple par des essais.

Le seuil de dissimilarité peut être préalablement déterminé pour la/chaque zone d'écoute, par exemple lors d'une phase préliminaire de calibration. Lors d'une telle phase préliminaire, un nombre connu d'émetteurs impulsionnels peuvent être disposés dans une zone d'écoute. Puis, les étapes du procédé selon l'invention peuvent être mises en oeuvre pour obtenir une agrégation hiérarchique des émissions. Comme le nombre d'émetteurs est connu, il est alors possible de déterminer le seuil de dissimilarité à utiliser pour la zone d'écoute.

Ainsi, la solution proposée par la présente invention permet de réaliser une détection plus précise et plus performante d'émetteurs impulsionnels dans une zone, comparée aux solutions existantes.

Dans la présente demande, par « émetteur impulsionnel », ou « émetteur de signal impulsionnel », on entend :

- un émetteur émettant au moins un signal composé d'impulsion(s), tel qu'un radar ou un sonar, ou
- un émetteur radiofréquence émettant au moins un signal composé de burst(s), ou de salve(s).

Dans ce dernier cas, chaque burst émis par l'émetteur radiofréquence est considéré et traité comme étant une impulsion, sans se soucier des données, ou des informations, contenues dans ledit burst.

Suivant des modes de réalisation, pour au moins deux émissions, l'étape de calcul du score de dissimilarité entre lesdites deux émissions peut être réalisée en fonction d'un score de similarité préalablement calculé entre lesdites deux émissions.

En particulier, le score de dissimilarité, noté $SD_{ij}$, entre deux émissions, notée $E^i$ et $E^j$, peut être calculée en fonction d'un score de similarité, noté $SS_{ij}$, entre lesdites deux impulsions en utilisant toute relation, telle que par exemple la relation suivante :

$$SD_{ij} = 1 - SS_{ij}$$

Le score de similarité entre deux émissions peut être calculé en utilisant toute solution connue.

Suivant des exemples de réalisation, le score de similarité entre deux émissions peut être calculé/estimé par un modèle intelligent préalablement entrainé pour le calcul d'un score de similarité entre deux émissions.

Dans ce cas, pour au moins deux émissions, l'étape de calcul du score de dissimilarité peut comprendre une étape de calcul du score de similarité entre lesdites deux émissions par un modèle intelligent préalablement entrainé pour le calcul d'un score de similarité entre deux émissions.

Le modèle intelligent peut prendre en entrée un vecteur de données représentant l'impulsion. En particulier, le vecteur de données peut être formé par les descripteurs des impulsions faisant partie de ladite émission.

Par exemple, une émission $E^i$ peut être représentée par le vecteur de données :

$$E^i = \{V^i_1, \ldots, V^i_k, \ldots, V^i_K\}$$

avec $V^i_k$ représentant le descripteur de l'impulsion k au sein de ladite émission.

Suivant des exemples de réalisation, le modèle intelligent peut être un réseau neuronal à apprentissage supervisé.

En particulier, le réseau neuronal peut être un réseau de classification binaire fournissant une donnée numérique représentant un score de similarité normalisé, par exemple compris entre 0 et 1.

Suivant des modes de réalisation, le procédé selon l'invention peut comprendre, avant l'étape de calcul de score de dissimilarité, une étape de génération, pour chaque émission, de plusieurs super-émissions, chacune obtenue par concaténation de ladite émission avec chacune des autres émissions, ladite étape de calcul du score de dissimilarité étant réalisée avec lesdites super-émissions.

Autrement dit, pour chaque paire d'émissions, les émissions formant ladite paire sont regroupées au sein d'une même super-émission. Suivant en encore une autre formulation, pour chaque paire d'émissions, les impulsions composant chacune des émissions de ladite paire d'émissions, sont regroupées au sein d'une même super-émission.

Par exemple, pour une paire d'émission $E^i$ et $E^j$ telle que :

$$E^i = \{V^i_1, \ldots, V^i_K\}$$

$$E^j = \{V^j_1, \ldots, V^j_L\}$$

La super-émission, $SE^{ij}$, obtenue par concaténation desdites émissions peut être :

$$SE^{ij} = \{V^i_1, \ldots, V^i_K, V^j_1, \ldots, V^j_L\}$$

Optionnellement, mais préférentiellement, lors du regroupement des impulsions au sein d'une même super-émission, lesdites impulsions peuvent être ordonnées, ou réordonnées, en fonction de leur date de réception.

Ainsi, la détermination d'un score de dissimilarité peut être réalisée en fonction de ladite super-émission.

Suivant un exemple de réalisation :

- la super-émission peut être entrée dans le modèle intelligent, de type réseau neuronal, pour obtenir un score de similarité, puis
- la score de dissimilarité peut être calculée en fonction dudit score de similarité, par exemple en utilisant la relation indiquée plus haut.

Quelle que soit la technique pour calculer le score de dissimilarité, l'étape de calcul du score de dissimilarité fournit une matrice carrée symétrique, dite matrice de dissimilarité, comportant autant de lignes, respectivement de colonnes, qu'il y a d'émissions. La matrice de dissimilarité comporte à l'intersection de chaque ligne avec chaque colonne un score de dissimilarité entre l'émission correspondant à cette ligne et l'émission correspondant à cette colonne. Bien entendu, la diagonale de cette matrice comporte uniquement des valeurs nulles.

Suivant des exemples de réalisation, l'étape d'agrégation peut être réalisée avec un algorithme d'agrégation hiérarchique non-supervisé. Il est possible d'utiliser tout type d'algorithme d'agrégation hiérarchique non-supervisé.

L'algorithme d'agrégation hiérarchique non-supervisé peut être configuré pour réaliser plusieurs itérations d'une étape d'agrégation comprenant les étapes suivantes :

- fusion des paires d'émissions les plus similaires, en fonction des scores de dissimilarité, ladite fusion fournissant une seule émission à partir desdites émissions fusionnées, et
- après ladite fusion, mise à jour des scores de dissimilarité entre toutes les paires d'émission restantes.

Autrement dit, à chaque itération, l'étape d'agrégation fusionne deux émissions pour lesquelles le score de dissimilarité est le plus faible parmi tous les scores de dissimilarité. Le nombre d'émissions diminue de un. Une nouvelle matrice carrée de dissimilarité comportant une colonne et une ligne en moins est alors recalculée. Puis une nouvelle itération de l'étape d'agrégation est réalisée. Ainsi de suite, jusqu'à obtenir une unique émission formée par toutes les émissions, ou alors jusqu'à obtenir une matrice de dissimilarité dont toutes les valeurs sont supérieures à la valeur seuil de dissimilarité

Lorsque deux émissions sont regroupées lors d'une étape d'agrégation, la nouvelle matrice de dissimilarité peut être calculée de plusieurs façons possibles.

Suivant un exemple de réalisation, tous les scores de dissimilarité sont recalculés, par exemple tel que décrit plus haut.

Suivant un autre exemple de réalisation, les scores de dissimilarité entre les émissions non fusionnées sont conservées. Puis, un nouveau score de dissimilarité est calculé entre la nouvelle émission obtenue par fusion et chacune des émissions restantes. Pour chaque émission restante, le nouveau score de dissimilarité entre la nouvelle émission obtenue par fusion et ladite émission restante peut être calculée en fonction des scores de dissimilarité entre cette émission restante et chacune des émissions fusionnées. Dans ce cas, le nouveau score de dissimilarité peut être calculée selon plusieurs méthodes, à savoir :

- une méthode, dite « single » : le nouveau score de dissimilarité correspond au plus petit des scores de dissimilarité entre chacune des deux émissions fusionnées et l'émission restante ; ou
- une méthode, dite « complète » : le nouveau score de dissimilarité correspond au plus grand des scores de dissimilarité entre chacune des deux émissions fusionnées et l'émission restante ; ou
- une méthode, dite « moyenne » : le nouveau score de dissimilarité correspond à la moyenne des scores de dissimilarité entre chacune des deux émissions fusionnées et l'émission restante ; ou
- une méthode, dite « centroïd » : le nouveau score de dissimilarité correspond au barycentre des scores de dissimilarité entre chacune des deux émissions fusionnées et l'émission restante.

Suivant un exemple de réalisation, l'étape d'agrégation peut réaliser une construction d'un dendrogramme pour toutes les émissions.

Suivant des modes de réalisation, chaque impulsion peut être une impulsion émise par un émetteur impulsionnel de type radar ou sonar. Dans ce cas, l'invention est mise en oeuvre pour détecter le nombre d'émetteur(s) radar ou d'émetteur(s) sonar, dans une zone d'écoute.

Suivant des modes de réalisation, chaque impulsion peut être une salve, (« burst » en anglais), émise par un émetteur radiofréquence. Dans ce cas, l'invention est mise en oeuvre pour détecter le nombre d'émetteur(s) radiofréquence dans une zone d'écoute.

Selon un autre aspect de l'invention, il est proposé un programme d'ordinateur comprenant des instructions exécutables qui, lorsqu'elles sont exécutées par un appareil informatique, mettent en oeuvre toutes les étapes du procédé, selon l'invention, de détection d'émetteurs de signaux impulsionnels.

Le programme d'ordinateur peut être en tout langage informatique, tel que par exemple en langage machine, en C, C++, JAVA, Python, etc.

Selon un autre aspect de l'invention, il est proposé un dispositif de détection d'émetteurs de signaux impulsionnels comprenant des moyens configurés pour mettre en oeuvre toutes les étapes du procédé selon l'invention de détection d'émetteurs de signaux impulsionnels.

Le dispositif selon l'invention peut être tout type d'appareil tel qu'un serveur, un ordinateur, une tablette, un calculateur, un processeur, une puce informatique, programmé pour mettre en oeuvre le procédé selon l'invention, par exemple en exécutant le programme d'ordinateur selon l'invention.

Selon un autre aspect de l'invention, il est proposé un récepteur de signaux impulsionnels comprenant :

- au moins une antenne de réception, pour recevoir des impulsions émises par un ou plusieurs émetteurs impulsionnels ; et
- un dispositif selon l'invention.

Le récepteur peut être un récepteur fixe ou un récepteur embarqué sur un véhicule, et en particulier sur un aéronef.

Le récepteur peut comprendre une unique antenne, ou plusieurs antennes formant un réseau antennaire.

## Description des figures et modes de réalisation

D'autres avantages et caractéristiques apparaîtront à l'examen de la description détaillée de modes de réalisation nullement limitatifs, et des dessins annexés sur lesquels :

- la FIGURE 1 est une représentation schématique d'un premier exemple de réalisation non limitatif d'un procédé selon l'invention ;
- la FIGURE 2 est une représentation schématique d'un deuxième exemple de réalisation non limitatif d'un procédé selon l'invention ;
- la FIGURE 3a est un exemple non limitatif d'une matrice de dissimilarité pouvant être obtenu avec la présente invention ;
- la FIGURE 3b est un exemple non limitatif d'un dendrogramme pouvant être obtenu avec la présente invention ;
- la FIGURE 4 est une représentation schématique d'un exemple de réalisation non limitatif d'un dispositif selon l'invention ; et
- la FIGURE 5 est une représentation schématique d'un exemple de réalisation non limitatif d'un récepteur selon l'invention.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à l'état de la technique antérieure. Cette sélection comprend au moins une caractéristique de préférence fonctionnelle sans détails structurels, ou avec seulement une partie des détails structurels si c'est cette partie qui est uniquement suffisante pour conférer un avantage technique ou pour différencier l'invention par rapport à l'état de la technique antérieure.

En particulier toutes les variantes et tous les modes de réalisation décrits sont combinables entre eux si rien ne s'oppose à cette combinaison sur le plan technique.

Sur les figures et dans la suite de la description, les éléments communs à plusieurs figures conservent la même référence.

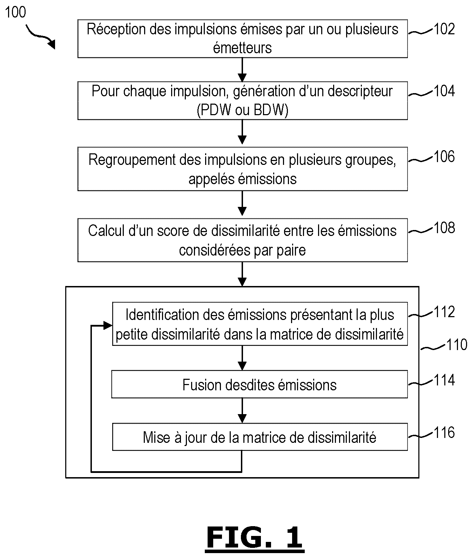

La FIGURE 1 est une représentation schématique d'un exemple de réalisation non limitatif d'un procédé selon la présente invention.

Le procédé 100 de la FIGURE 1 peut être utilisé pour détecter des émetteurs impulsionnel(s), tels qu'un ou des radars, ou un ou des sonars, ou encore un ou des émetteurs radiofréquence(s), dans une zone d'écoute, à partir d'impulsions reçues depuis ladite zone d'écoute.

Le procédé 100 comprend une étape 102 de réception de plusieurs impulsions. Suivant un exemple de réalisation, l'étape 102 est réalisée pour recevoir pour récupérer les impulsions correspondants à un temps d'écoute de 10 ms par exemple.

Lors d'une étape 104 un descripteur est généré pour chaque impulsion reçue. Pour une impulsion émise par un radar ou un sonar, le descripteur peut être un PDW (« Pulse Descriptor Word »). Pour une salve (« burst ») émise par un émetteur radiofréquence, le descripteur peut être un BDW (« Burst Descriptor Word »). Les techniques pour générer un descripteur sont bien connues de l'Homme du Métier et ne seront pas détaillées ici par soucis de concision.

Dans la suite, et sans perte de généralité, on considère que le procédé 100 est mise en oeuvre pour détecter le nombre de radar(s) dans une zone d'écoute et que chaque impulsion est une impulsion émise par un radar se trouvant dans ladite zone d'écoute. Dans ce cas, chaque descripteur d'une impulsion peut être un PDW pouvant comprendre une combinaison quelconque d'un ou de plusieurs des paramètres suivants : la fréquence de l'impulsion, la date de réception de l'impulsion, la largeur de l'impulsion, le niveau de l'impulsion, la durée écoulée entre deux impulsions consécutives (« PRI » pour « Puise Repetition Time »), la direction de réception de l'impulsion (« DOA » pour « Direction of Arrivai »), etc.

Lors d'une étape 106, les impulsions reçues sont regroupées en plusieurs groupes, chacun appelé émission, en fonction des PDW générés à l'étape 104. Lors de cette étape, les impulsions présentant les mêmes PDW sont regroupés au sein d'une même impulsion. Cette étape fournit donc une ou plusieurs émissions, chacune comprenant une ou plusieurs impulsions. Par exemple, chaque émission $E^i$ comprend plusieurs impulsions, chacune représentée par un PDW se présentant sous la forme d'un vecteur de données $V^i_k$ de sorte que

$$E^i = \{V^i_1, \ldots, V^i_K\}$$

Optionnellement, mais préférentiellement, les impulsions formant une émission sont ordonnées selon leur date de réception.

Lors d'une étape 108, un score de dissimilarité est calculé entre les émissions considérées par paire. Ainsi, s'il existe I émissions, alors l'étape 108 réalise un calcul de $((I) \times (I-1))/2$ scores de dissimilarité. Ces scores dissimilarité sont par exemple mémorisés au sein d'une matrice carrée, dite matrice de dissimilarité, notée MSD, comprenant I lignes et I colonnes. Les valeurs de la diagonale de la matrice de similarité MSD sont égales à 0.

Le score de dissimilarité entre deux émissions peut être déterminé suivant toute méthode connue. Par exemple, le score de dissimilarité entre deux émissions peut être déterminée par un modèle intelligent, de type réseau neuronal, entrainé pour estimer un score de dissimilarité entre deux émissions.

Puis, lors d'une étape 110, une agrégation hiérarchique des émissions est réalisée pour regrouper, deux à deux, et de manière séquentielle, les émissions en fonction des scores de dissimilarité préalablement calculés. L'agrégation hiérarchique peut être réalisée avec tout type d'algorithme de regroupement hiérarchique connu.

Suivant un exemple de réalisation, le regroupement hiérarchique peut être réalisée, de manière itérative, chaque itération comprenant les étapes suivantes.

Lors d'une étape 112, les deux émissions présentant, entre elles, le plus petit score de dissimilarité sont identifiées dans la matrice de dissimilarité. Autrement, on identifie dans la matrice de dissimilarité la plus petite valeur qui ne se trouve pas dans la diagonale de la matrice.

Lors d'une étape 114, les deux émissions présentant, entre elles, le plus petit score de dissimilarité sont fusionnées pour obtenir une nouvelle émission. Lors de cette étape, les deux émissions sont par exemple concaténées, éventuellement en réordonnant les impulsions dans le temps selon leurs dates de réception.

Puis lors d'une étape 116, une nouvelle matrice de dissimilarité est calculée pour le groupe d'émissions formé par les émissions restantes et la nouvelle émission. Cette étape 116 de mise à jour peut recalculer tous les scores de dissimilarité entre toutes les émissions.

Alternativement, cette étape 116 de mise à jour peut reprendre les valeurs déjà mémorisées dans la matrice de dissimilarité pour toutes les paires d'émissions qui ne sont pas fusionnées. De plus, un score de dissimilarité peut être calculée entre la nouvelle émission obtenue par fusion à l'étape 114 et toutes les émissions restantes qui ne sont pas concernées par la fusion. Le score de dissimilarité entre la nouvelle émission et chaque émission restante peut correspondre :

- au plus petit des scores de dissimilarité entre chacune des deux émissions fusionnées et ladite émission restante ; ou
- au plus grand des scores de dissimilarité entre chacune des deux émissions fusionnées et ladite émission restante ; ou
- à la moyenne des scores de dissimilarité entre chacune des deux émissions fusionnées et l'émission restante.

Une nouvelle matrice de dissimilarité carrée comprenant une ligne en moins et une colonne en moins est alors déterminée à l'étape 116.

Puis une nouvelle itération de l'étape 110, c'est-à-dire des étapes 112-116 est réalisée, avec le nouveau groupe d'émissions et la nouvelle matrice de dissimilarité, jusqu'à ce que toutes les émissions soient regroupées au sein d'une unique émission.

Suivant un exemple de réalisation, l'étape de regroupement hiérarchique 110 peut être réitérée et un dendrogramme peut être construit au fur et à mesure. Le dendrogramme peut comprendre sur l'axe des ordonnées le score de dissimilarité normalisé, entre 0 et 1. Ainsi, il est possible de visualiser la valeur du score de dissimilarité ayant permis de fusionner deux émissions entre-elles.

Il est possible de déterminer le nombre d'émissions restants pour un seuil prédéterminé du score de dissimilarité de sorte qu'il est possible d'identifier le nombre d'émetteurs à l'origine des impulsions reçues. En d'autres termes, pour une valeur de dissimilarité, le nombre d'émissions restantes, c'est-à-dire non fusionnées, correspond au nombre d'émetteurs dans la zone d'écoute.

Alternativement, l'étape de regroupement hiérarchique 110 peut être réitérée jusqu'à ce que toutes les valeurs de dissimilarité restantes dans la matrice de dissimilarité soient supérieures au seuil de dissimilarité. Dans ce cas, on considère que toutes les émissions restantes présentent une dissimilarité telle qu'elles sont toutes émises par un émetteur différent. Le nombre d'émissions restantes, c'est-à-dire non fusionnées, correspond alors au nombre d'émetteurs dans la zone d'écoute.

Le seuil de dissimilarité utilisé pour déterminer le nombre d'émetteurs peut être préalablement déterminé pour la/chaque zone d'écoute, par exemple lors d'une phase préliminaire de calibration. Lors d'une telle phase préliminaire, un nombre connu d'émetteurs impulsionnels peuvent être disposés dans une zone d'écoute. Puis les étapes du procédé selon l'invention peuvent être mises en oeuvre pour obtenir une agrégation hiérarchique des paires d'émissions. Comme le nombre d'émetteurs est connu il est alors possible de déterminer le seuil de dissimilarité qu'il convient d'utiliser pour toutes les zones d'écoutes.

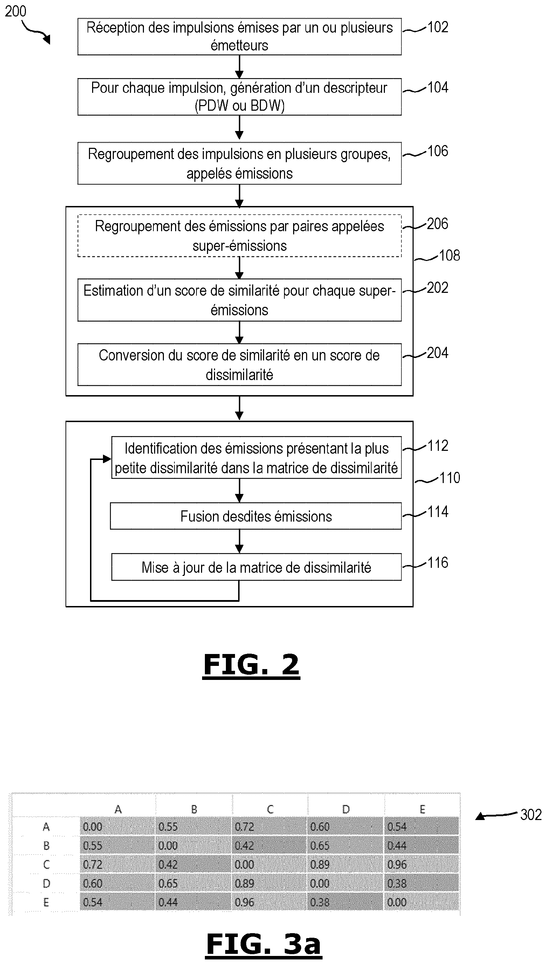

La FIGURE 2 est une représentation schématique d'un autre exemple de réalisation non limitatif d'un procédé selon la présente invention.

Le procédé 200 de la FIGURE 2 peut être utilisé pour détecter des émetteurs impulsionnel(s), tels qu'un ou des radars, ou un ou des sonars, ou encore un ou des émetteurs radiofréquence(s), dans une zone d'écoute, à partir d'impulsions reçues depuis ladite zone d'écoute.

Le procédé 200 comprend toutes les étapes du procédé 100 de la FIGURE 1.

Dans le procédé 200 de la FIGURE 2, l'étape 108 de calcul du score de dissimilarité entre deux émissions est réalisée de la manière suivante. Cette étape 108 est réalisée pour chaque paire d'émissions individuellement, à tour de rôle ou en parallèle.

L'étape 108 comprend une étape 202 lors de laquelle, les émissions sont fournies en entrée d'un modèle intelligent préalablement entrainée pour fournir un score de similarité normalisé entre 0 et 1, pour lesdites émissions. En particulier, pour une paire d'émissions formée par l'émission $E^i$ et l'émission $E^j$, les descripteurs de toutes les impulsions, sont donnés en entrée du modèle intelligent :

$$E^i = \{V^i_1, \ldots, V^i_K\}$$

$$E^j = \{V^j_1, \ldots, V^j_L\}$$

avec $V^i_k$ le descripteur de l'impulsion k de l'émission $E^i$, avec k un nombre entier $1 \leq k \leq K$ et $K \geq 1$, et avec $V^j_l$ le descripteur de l'impulsion l de l'émission $E^j$, avec l un nombre entier tel que $1 \leq l \leq L$ et $L \geq 1$.

Puis, lors d'une étape 204, pour chaque paire d'émissions, un score de dissimilarité est calculé en fonction du score de similarité estimé par le modèle intelligent à l'étape 202. Par exemple, en notant SSij le score de similarité normalisée entre les émissions $E^i$ et $E^j$ obtenu à l'étape 202, le score de dissimilarité $SD_{ij}$ entre lesdites émissions $E^i$ et $E^j$ peut être calculé par la relation suivante :

$$SD_{ij} = 1 - SS_{ij}$$

Suivant des exemples de réalisation, le modèle intelligent peut être un réseau neuronal à apprentissage supervisé.

En particulier, le réseau neuronal peut être un réseau de classification binaire fournissant une donnée numérique représentant un score de similarité normalisé, par exemple compris entre 0 et 1.

Un tel modèle peut être entrainé à partir d'une base d'entrainement comprenant une multitude de jeux d'entrainement, chacun formé par :

- deux émissions d'entrainement, et
- un score de similarité d'entrainement dont la valeur est égale à :

    ▪ 0, lorsque lesdites deux émissions d'entrainement ont été émises par deux émetteurs différents, ou
    ▪ 1, lorsque lesdites deux émissions d'entrainement ont été émises par un même émetteur.

L'étape 108 peut comprendre, avant l'étape 202 d'estimation d'un score de similarité, une étape 206, optionnelle, générant, pour chaque paire d'émissions une super-émission, obtenue par concaténation des deux émissions formant ladite paire d'émissions. Dans ce cas, l'étape 202 d'estimation du score de similarité est réalisée en entrant ladite super émission dans le modèle intelligent.

Par exemple, pour une paire d'émissions formée par les émissions $E^i$ et $E^j$ telle que :

$$E^i = \{V^i_1, \ldots, V^i_K\}$$

$$E^j = \{V^j_1, \ldots, V^j_L\}$$

une super-émission, $SE^{ij}$, est générée par concaténation desdites émissions $E^i$ et $E^j$, telle que :

$$SE^{ij} = \{V^i_1, \ldots, V^i_K, V^j_1, \ldots, V^j_L\}$$

Dans ce cas, le modèle intelligent prend en entrée le vecteur de données $SE^{ij}$ pour fournir en sortie un score de similarité.

Optionnellement, mais préférentiellement, lors du regroupement des deux émissions au sein d'une même super-émission, les impulsions formant lesdites émissions peuvent être ordonnées, ou réordonnées, en fonction de leur date de réception.

La FIGURE 3a est une représentation schématique d'un exemple de réalisation non limitatif d'une matrice de scores de dissimilarité pouvant être obtenue par le procédé selon l'invention.

La matrice de dissimilarité 302 peut être obtenue par le procédé 100 de la FIGURE 1 ou par le procédé 200 de la FIGURE 2.

La matrice de dissimilarité 302 donne des scores de dissimilarité obtenus pour cinq émissions notées A, B, C, D, E. Au moins une émission peut comprendre un nombre d'impulsions différent d'au moins une autre impulsion. Au moins deux impulsions peuvent comprendre un même nombre d'impulsions.

On observe sur la FIGURE 3a que la matrice 302 est une matrice symétrique comportant des valeurs nulles dans sa diagonale.

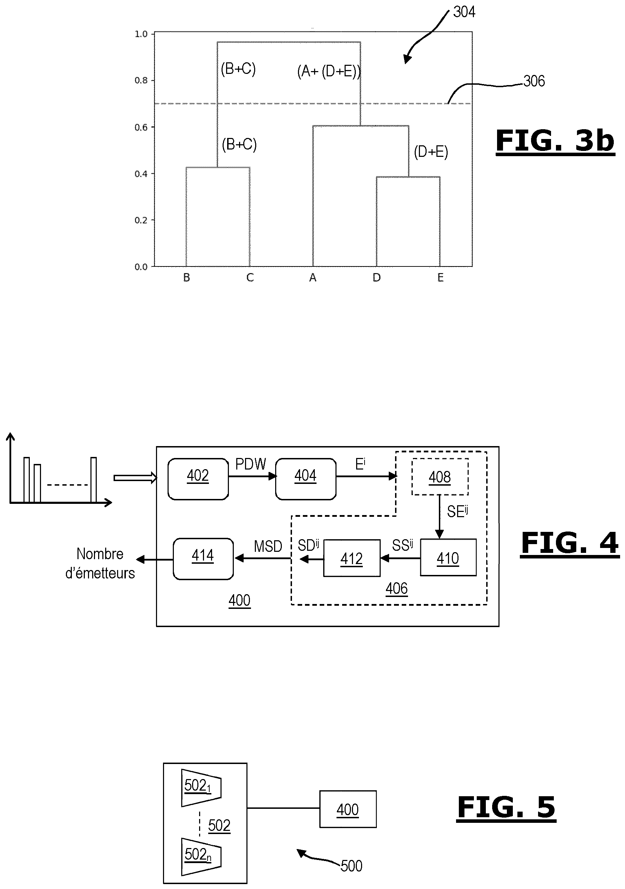

La FIGURE 3b est une représentation schématique d'un exemple de réalisation non limitatif d'un dendrogramme 304 pouvant être obtenu avec la matrice de dissimilarité 302 de la FIGURE 3a, en fin de l'étape d'agrégation hiérarchique du procédé selon l'invention, et en particulier en fin de l'étape 110. Le dendrogramme représente en ordonnée le score de dissimilarité normalisé entre 0 et 1.

On aperçoit sur la FIGURE 3b que l'ensemble des émissions A à E ont été fusionnées à des niveaux de scores de dissimilarité différents. Tout d'abord les émissions D et E ont été fusionnées puisque ces émissions présentent entre elles le score de dissimilarité le plus faible (voir a matrice 302). Cette fusion a fourni une émission fusionnée (D+E). Puis, ce sont les émissions B et C qui ont été fusionnées, pour obtenir une émission fusionnée (B+C). Ensuite, l'émission A a été fusionnée avec l'émission (D+E), pour obtenir une nouvelle émis-

on

sion fusionnée (A+(D+E)).

La FIGURE 3b montre un exemple non limitatif d'un seuil de score de dissimilarité 306 dont la valeur est fixée à 0,7. En prenant en compte ce seuil, le procédé selon l'invention indique que le nombre d'émetteurs de signaux impulsionnels dans la zone d'écoute est 2 pour toutes les émissions A à E.

A titre d'alternative, en prenant un seuil dont la valeur est de 0.5, le nombre d'émetteurs de signaux impulsionnels dans la zone d'écoute serait de 3.

La FIGURE 4 est une représentation schématique d'un exemple de réalisation non limitatif d'un dispositif selon la présente invention.

Le dispositif 400 de la FIGURE 4 peut être utilisé pour mettre en oeuvre un procédé selon l'invention, et en particulier le procédé 100 de la FIGURE 1 ou le procédé 200 de la FIGURE 2.

Le dispositif 400 comprend au moins un module 402 configuré pour générer, pour chaque impulsion reçue, un jeu de données, dit descripteur, comprenant au moins une caractéristique de ladite impulsion, tel qu'un PDW pour une impulsion ou un BDW pour un burst. Ce module 402 est en particulier configuré pour mettre en oeuvre l'étape 104 décrite plus haut.

Le dispositif 400 comprend en outre un module 404 de regroupement des impulsions reçues en plusieurs groupes, dits émissions, en fonction des descripteurs desdites impulsions. Ce module 404 est en particulier configuré pour mettre en oeuvre l'étape 106 décrite plus haut.

Le dispositif 400 comprend en outre un module 406 de calcul d'un score de dissimilarité normalisé entre deux émissions formant une paire, et fournissant pour l'ensemble des émissions une matrice de scores de dissimilarité, MSD. Ce module 406 est en particulier configuré pour mettre en oeuvre l'étape 108 décrite plus haut. Dans certains modes de réalisation, ce module 406 peut comprendre :

- un module 408, optionnel, de regroupement de deux émissions formant une paire d'émissions en une super-émission, par exemple par concaténation, et optionnellement d'ordonnancement des impulsions composant ces deux émissions par date de réception au sein de ladite super-émission. Ce module 408 est en particulier configuré pour mettre en oeuvre l'étape 206 décrite plus haut ;
- un module 410 exécutant, ou correspondant à, un modèle intelligent, tel qu'un réseau neuronal de classification binaire, pour estimer un score de similarité normalisé entre deux émissions formant une paire, prenant en entrée soit les deux émissions, soit une super-émission obtenue par regroupement préalable desdites deux émissions. Ce module 410 est en particulier configuré pour mettre en oeuvre l'étape 202 décrite plus haut ; et
- un module 412 de calcul du score de dissimilarité normalisé en fonction dudit score de similarité. Ce module 412 est en particulier configuré pour mettre en oeuvre l'étape 204 décrite plus haut.

Le dispositif 300 comprend en outre un module 414 d'identification d'un nombre d'émetteur(s) impulsionnel(s) par agrégation hiérarchique desdites paires d'émission, et en fonction d'un seuil de dissimilarité préalablement déterminé.

Au moins un des modules 402-414 peut être un module matériel, tel qu'un processeur, une puce électronique, un calculateur, un ordinateur, un serveur, etc.

Au moins un des modules 402-414 peut être un module logiciel, tel qu'une application, un programme d'ordinateur, une machine virtuelle, etc.

Au moins un des modules 402-414 peut être un module individuel et indépendant des autres modules 402-414.

Au moins deux des modules 402-414 peuvent être intégrés au sein d'un même module.

Le dispositif 400 peut se présenter sous une forme matérielle, tel qu'un ordinateur, un serveur, un processeur, une puce électronique, etc.

Le dispositif 400 peut se présenter sous une forme logicielle tel qu'un programme d'ordinateur, ou une application, par exemple une application pour un appareil utilisateur de type tablette ou Smartphone.

La FIGURE 5 est une représentation schématique d'un exemple de réalisation non limitatif d'un récepteur selon la présente invention.

Le récepteur 500 comprend une ou plusieurs antennes $502_1$-$502_n$ formant un réseau antennaire 502, pour capter des impulsions émises par un ou des émetteurs pour une zone d'écoute.

Le récepteur 500 de la FIGURE 5 comprend en outre un dispositif selon l'invention, et en particulier le dispositif 400 de la FIGURE 4, pour traiter les impulsions et détecter le nombre d'émetteurs impulsionnels dans la zone d'écoute.

Au moins une, en particulier chaque, antenne $502_i$ peut être configurée pour recevoir des impulsions émises depuis une zone d'écoute individuelle, différente d'une zone d'écoute associée à au moins une autre antenne $502_j$.

Au moins deux, en particulier toutes les, antennes $502_1$-$502_n$ peuvent être configurées pour recevoir des impulsions émises depuis une même zone d'écoute.

Bien entendu l'invention n'est pas limitée aux exemples qui viennent d'être décrits.

**Revendications**

1. Procédé (100;200) de détection d'émetteur(s) de signaux impulsionnels, dans une zone, dite zone d'écoute, à partir d'impulsions reçues, ledit procédé (100;200) comprenant les étapes suivantes :

   - génération (104), pour chaque impulsion reçue, d'un jeu de données, dit descripteur, comprenant au moins une caractéristique de ladite impulsion ;

- regroupement (106) des impulsions reçues en plusieurs groupes, dits émissions, en fonction des descripteurs desdites impulsions ;

- calcul (108) d'un score de dissimilarité entre lesdites émissions considérées par paire ; et

- identification (110) d'un nombre d'émetteur(s) impulsionnel(s) par agrégation hiérarchique desdites paires d'émission, en fonction d'un seuil de dissimilarité préalablement déterminé.

2. Procédé (100;200) selon la revendication précédente, **caractérisé en ce que**, pour au moins deux émissions, l'étape (110) de calcul du score de dissimilarité entre lesdites deux émissions est réalisée en fonction d'un score de similarité préalablement calculé entre lesdites deux émissions.

3. Procédé (200) selon la revendication précédente, **caractérisé en ce que**, pour au moins deux émissions, l'étape (110) de calcul du score de dissimilarité comprend une étape (202) de calcul du score de similarité entre lesdites deux émissions par un modèle intelligent préalablement entrainé pour le calcul d'un score de similarité entre deux émissions.

4. Procédé (200) selon la revendication précédente, **caractérisé en ce que** le modèle intelligent est un réseau neuronal à apprentissage supervisé.

5. Procédé (200) selon l'une quelconque des revendications précédentes, **caractérisé en ce qu'**il comprend, avant l'étape (202-204) de calcul de score de dissimilarité, une étape (306) de génération, pour chaque émission de plusieurs super-émissions, chacune obtenue par concaténation de ladite émission avec chacune des autres émissions, ladite étape (202-204) de calcul du score de dissimilarité étant réalisée avec lesdites super-émissions.

6. Procédé (100;200) selon l'une quelconque des revendications précédentes, **caractérisé en ce que** l'étape (110) d'agrégation est réalisée avec un algorithme d'agrégation hiérarchique non supervisé, ledit algorithme réalisant plusieurs itérations d'une étape d'agrégation (110) comprenant les étapes suivantes :

- fusion (114) des paires d'émissions les plus similaires, en fonction des scores de dissimilarité, ladite fusion fournissant une seule émission à partir desdites émissions fusionnées, et

- après ladite fusion, mise à jour (116) des scores de dissimilarité entre toutes les paires d'émission restantes.

7. Procédé (100;200) selon l'une quelconque des revendications précédentes, **caractérisé en ce que** l'étape (110) d'agrégation réalise une construction d'un dendrogramme pour toutes les émissions.

8. Procédé (100;200) selon l'une quelconque des revendications précédentes, **caractérisé en ce que** chaque impulsion est :

- une impulsion émise par un émetteur impulsionnel de type radar, ou

- une salve, (« burst » en anglais), émise par un émetteur radiofréquence.

9. Programme d'ordinateur comprenant des instructions exécutables qui, lorsqu'elles sont exécutées par un appareil informatique, mettent en en oeuvre toutes les étapes du procédé (100;200) de détection d'émetteurs impulsionnels selon l'une quelconque des revendications précédentes.

10. Dispositif (400) de détection d'émetteurs de signaux impulsionnels, à partir d'un ensemble de plusieurs impulsions reçues, comprenant des moyens configurés pour mettre en oeuvre le procédé (100;200) selon l'une quelconque des revendications 1 à 8.

11. Récepteur (500) de signaux impulsionnels, comprenant :

- au moins une antenne de réception ($502_1$-$502_n$), pour recevoir des impulsions émises par un ou plusieurs émetteurs impulsionnels ; et

- un dispositif (400) selon la revendications précédente.

100

Réception des impulsions émises par un ou plusieurs émetteurs ——102

↓

Pour chaque impulsion, génération d'un descripteur (PDW ou BDW) ——104

↓

Regroupement des impulsions en plusieurs groupes, appelés émissions ——106

↓

Calcul d'un score de dissimilarité entre les émissions considérées par paire ——108

↓

Identification des émissions présentant la plus petite dissimilarité dans la matrice de dissimilarité ——112

——110

↓

Fusion desdites émissions ——114

↓

Mise à jour de la matrice de dissimilarité ——116

# FIG. 1

200

| Réception des impulsions émises par un ou plusieurs émetteurs | ~102 |

↓

| Pour chaque impulsion, génération d'un descripteur (PDW ou BDW) | ~104 |

↓

| Regroupement des impulsions en plusieurs groupes, appelés émissions | ~106 |

↓

Regroupement des émissions par paires appelées super-émissions — ~206

↓ — ~108

Estimation d'un score de similarité pour chaque super-émissions — ~202

↓

Conversion du score de similarité en un score de dissimilarité — ~204

↓

Identification des émissions présentant la plus petite dissimilarité dans la matrice de dissimilarité — ~112

— ~110

↓

Fusion desdites émissions — ~114

↓

Mise à jour de la matrice de dissimilarité — ~116

# FIG. 2

|   | A | B | C | D | E |
|---|---|---|---|---|---|
| A | 0.00 | 0.55 | 0.72 | 0.60 | 0.54 |
| B | 0.55 | 0.00 | 0.42 | 0.65 | 0.44 |
| C | 0.72 | 0.42 | 0.00 | 0.89 | 0.96 |
| D | 0.60 | 0.65 | 0.89 | 0.00 | 0.38 |
| E | 0.54 | 0.44 | 0.96 | 0.38 | 0.00 |

←— 302

# FIG. 3a

**FIG. 3b**

**FIG. 4**

**FIG. 5**

Europäisches
Patentamt

European
Patent Office

Office européen
des brevets

## RAPPORT DE RECHERCHE EUROPEENNE

Numéro de la demande

EP 22 30 5804

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | MOTTIER MANON ET AL: "Deinterleaving and Clustering unknown RADAR pulses", 2021 IEEE RADAR CONFERENCE (RADARCONF21), IEEE, 7 mai 2021 (2021-05-07), pages 1-6, XP033925911, DOI: 10.1109/RADARCONF2147009.2021.9455272 [extrait le 2021-06-14] * figures 5, 6 * * page 2, colonne de gauche, lignes 4-9 * * page 2, colonne de droite, lignes 4-13 * * page 3, colonne de gauche, lignes 3-9, 22-25 * * page 3, colonne de droite, lignes 32-41 * * page 4, colonne de gauche, lignes 17-18, 29-37 * * page 5, colonne de gauche, lignes 10-11 * * page 5, colonne de droite, lignes 2-4 * * page 6, colonne de gauche, lignes 2-5 * ----- | 1-11 | INV. G01S7/02 G01S7/52 |

DOMAINES TECHNIQUES RECHERCHES (IPC)

G01S

Le présent rapport a été établi pour toutes les revendications

| Lieu de la recherche | Date d'achèvement de la recherche | Examinateur |
|---|---|---|
| Munich | 19 octobre 2022 | Rodríguez González |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...........
& : membre de la même famille, document correspondant

EPO FORM 1503 03.82 (P04C02)